# EUROPEAN PATENT SPECIFICATION

(11) **EP 4 255 199 B1**
(45) Date of publication and mention of the grant of the patent: **28.10.2026**
(21) Application number: 21819535.2
(22) Date of filing: 26.11.2021
(51) Int. Cl.: A23C 11/10, A23J 1/14, A23J 3/14, A23L 11/50, A23C 20/02

(54) **NON-DAIRY PROTEIN BASED EDIBLE PRODUCT AND, PROCESS FOR MANUFACTURING THE SAME**
ESSBARES PRODUKT AUF DER BASIS VON MILCHFREIERPROTEINEN UND VERFAHREN ZU SEINER HERSTELLUNG
PRODUIT ALIMENTAIRE PROTEIQUE NON-LAITIER ET SON PROCEDE DE FABRICATION

(30) Priority: 01.12.2020 FI 20206231
(43) Date of publication of application: 11.10.2023
(73) Proprietor: Oddlygood Ltd, 00370 Helsinki (FI)
(72) Inventor: IMMONEN, Mika, 00370 Helsinki (FI); MUURONEN, Klaus, 00370 Helsinki (FI)
(74) Representative: Boco IP Oy Ab
(86) International application number: PCT/FI2021/050816
(87) International publication number: WO 2022/117918

(56) References cited:
- EP-B1- 0 479 596
- WO-A1-2020/193668
- CN-A- 107 385 002
- US-A1- 2011 274 797
- US-A1- 2019 216 126

## Description

### FIELD OF THE INVENTION

The present disclosure relates to the field of food technology. The disclosure concerns an improved processing and purification method for production of plant-based food product with neutral colour and taste as well as greatly improved functional properties, which are valued in production of numerous dairy analogous and other food products. Especially, the disclosure relates to a plant-based food product comprising a plant-based protein ingredient, a process for the manufacture thereof and uses in dairy-alternative products.

### BACKGROUND OF THE INVENTION

The use of vegetable proteins in food and beverage products has increased tremendously during the past ten years. Changing consumer trends have attracted people towards healthier and climate friendly choices, and plant-based products are considered as such. Moreover, at the same time protein rich products have become more and more popular. Plant based protein products are consumed by both athletes and normal consumers, because plant-based protein products are considered to be healthy, safe and highly nutritious.

However, the poor solubility of plant proteins, off-flavours caused by them and tendency to precipitate in sour products have caused challenges to food manufacturers. Further, the characteristic "beany flavour" of faba bean has been reduced by thermal pre-treatments thus minimizing the activity of enzymes that are detrimental to product flavor. The solubility of plant proteins has also been improved for example by extracting plant protein source with aqueous calcium salt solution.

Document EP 2566346 A4 discloses production of soluble protein solutions from pulses wherein pulses are extracted with calcium salt at pH 1.5 - 4.4, and thereafter the extracted protein is concentrated by filtration and optionally spray dried.

Olsen (1978) described a continuous pilot plant production of bean protein by extraction, centrifugation combination of decanter centrifuge and separator, ultrafiltration and spray drying.

Berot et al. (1987) described three different methods to extract protein from fava beans; a) ultrafiltration, b) alkaline extraction and acid precipitation combined with ultrafiltration and c) wet extraction method without concentration step.

Patent Application WO 2020051622 A1 describes a production process for legume protein ingredients with high protein content of at least 80 %, preferably 85 %, on dry weight basis. The extraction of said high protein food product comprises of: a) milling a supply of legumes to form a fine powder, b) hydrating said fine powder to form a liquid slurry, c) separation of solids from the liquid slurry to form a milk-like fluid; d) pasteurizing said milk-like fluid to remove unwanted organisms therefrom; e) filtrating said pasteurized milk-like fluid to remove permeates therefrom to form a substantially liquid product and f) removing moisture from the substantially liquid product to generate a high protein food product in the form of a powder.

Patent Application US 20160309732 A1 describes a production process for legume, non-soy, based ingredient with elevated protein and lowered starch content for use in cultured, dairy alternative, food products. Said process is comprised of following steps: a) hydrating non-soy legume material in water b) treating said aqueous solution with amylases, c) heat treating the solution, d) filtering the legume slurry to reduce starch content, d) adjusting the temperature of filtered legume slurry to add bacterial culture and e) holding the filtered legume slurry at the adjusted temperature for a period sufficient to acidify the filtered legume slurry to a pH of 4.7 or below to produce a cultured non-dairy product.

Patent US 10,143,226 B1, discloses yellow pea protein compositions with high digestibility and amino acid scores, wherein bitterness causing peptides and glucose from hydrolysed starch are separated by ultrafiltration. It describes a production of protein product from yellow pea flour, which consists of following steps: alkaline extraction and proteolytic treatment of yellow pea flour slurry, extracted protein rich water-soluble fraction is treated with amylases to reduce starch concentration. Starch reduced protein rich slurry is concentrated with ultrafiltration and diafiltration step, and after concentration step concentrated protein rich slurry is evaporated to remove excess water and spray dried to produce protein product with at least 80% protein in dry weight basis.

A problem with the disclosures described above is that plant protein raw materials tend to affect adversely on the structure, taste and colour of the final product. This causes challenges especially in milk mimetic products wherein milk-like neutral taste, colour and structure is required. Plant based protein products, and in particularly pulse products have typically bitter taste and dark colour that ranges from brown to black.

Another process for the preparation of plant protein composition from pulses is disclosed in US 2019/216126 A1, wherein an aqueous slurry of the pulse particles undergoes an alkaline extraction, and the water-soluble proteins in the protein-rich liquid fraction are separated from water-soluble lower molecular weight peptides and water-soluble non-proteins in the protein-rich liquid fraction by ultrafiltration to provide a protein-rich retentate, and removing water from that protein-rich retentate to provide a dry plant protein composition.

As described above, there are several challenges in producing plant-based food products and completely new methods are needed. There is still a constant need to provide new and cost-effective alternatives for producing various plant-based dairy-alternative products.

### SUMMARY OF THE INVENTION

The object of the present invention**,** which is defined by the claims, is to overcome problems related to producing plant-based dairy-alternative products. Especially, an object of the present invention is to provide a process for producing a plant-based food product comprising a high protein ingredient, a plant-based food product comprising a high protein ingredient, and use of the high protein ingredient in a product selected from the group consisting of plant-based dairy alternatives.

Another object with the present invention, is to provide a plant-based food product obtainable by the present process, comprising a high protein ingredient that has a protein content greater than about 70 % protein/dry matter, preferably the high-protein ingredient is an isolate with a protein content in excess of about 90 % protein/dry matter, preferably at least about 100 % protein/dry matter, (N x 6.25) dry weight basis.

It was surprisingly found that taste and functional properties of legume protein preparation, which is used in a plant-based food product can be efficiently improved in a simple and economic industrially applicable process involving low number of successive processing steps. Typical bitter or unpleasant taste of legume raw material is eliminated, and the structure formation characteristics of the high protein ingredient are improved in the same, simple process of the present invention.

An essential part of the present invention is utilizing a process by which plant protein or plant protein raw material is enzymatically modified in the presence of antioxidants, preferably ascorbic acid and Na₂SO₃. The plant protein raw material is fractionated into different fractions, such as to a fraction comprising soluble protein, a fraction comprising other components than soluble protein (insoluble fraction) and a permeate fraction and the protein is concentrated by a membrane filtration process and/or diafiltration.

The aim of the claimed process is to prepare a plant-based food product comprising a high protein ingredient, such as a protein isolate, which can be used as a liquid or powder in vegan products, such as vegan gurt, vegan cheese or vegan drink.

A major challenge for commercially available plant protein raw materials is their varying characteristics related to the structure, taste and color of the final product. This is particularly highlighted in the case of products imitating dairy products, where a particularly neutral taste and color is required from the raw material as well as the ability to form structures similar to dairy products. Above all, the formation of the structure is disturbed by the polysaccharides that are impurities in commercial products and the insoluble form of the protein in them. Protein solubility is a prerequisite for achieving a smooth and strong structure. When organoleptic properties of dairy products are imitated, the strong bean content and bitterness of available raw materials are the main challenges. In addition to this, the brown to black colours of legume protein products are not suitable for imitating light dairy products.

In the present process a reduction or removal of bitterness through enzymatically assisted extraction of protein fraction (protein concentrate) is carried out. As a result, a light colored plant protein ingredient with a neutral flavor, in which the protein is in soluble form, is obtained.

For example, oxidizing enzymes contained by a broad bean cause unpleasant flavors or off-flavors by cleaving fatty acids (lipoxygenases), and/or discoloration (polyphenol oxidases).

Discoloration may be controlled by combination of antioxidants ascorbic acid and sodium sulfate. Bean flavor and side flavors of antioxidants are removed by membrane filtration, such as ultramembrane filtration. The effect can be further enhanced by rinsing the concentrate during filtration with water.

The bitterness can be removed by using at least one enzyme or enzyme mix that contains enzyme activity capable of modifying polyphenols originating from leguminous plant raw material. At least one enzyme capable of modifying polyphenols may comprise carbohydrase, cellulase and/or mixture thereof, and comprises tannase activity.The combination of enzymes may be such as tannase with beta-glucanase, pectinase, hemicellulase or xylanase, or any combination thereof. One combination may be a mixture of tannase, pectinase and cellulase, or tannase and pectinase, or tannase and cellulase.

Thus, the present invention concerns a process for producing a plant-based food product, wherein the process comprises the following steps of
a. preparing a plant protein suspension by mixing leguminous plant protein raw material, at least one antioxidant, and water to obtain an aqueous protein suspension,
b. separating insoluble non-suspended solids from the aqueous protein suspension to obtain a clarified aqueous protein suspension,
c. treating said clarified aqueous protein suspension with at least one enzyme having tannase activity capable of modifying polyphenols originating from leguminous plant raw material, to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration process to obtain a high protein ingredient having a protein content greater than about 70% protein/dry matter as a retentate,
f. optionally washing the concentrated aqueous protein suspension by diafiltration,
g. obtaining a high protein ingredient having a protein content greater than about 70 wt% protein/dry matter as a retentate from the membrane filtration,
h. optionally, further concentrating the high protein ingredient into a protein concentrate or isolate in the form of suspension or powder,
i. fermenting and/or acidifying the high-protein ingredient, and optionally further cooling and/or adding jam, beta-glucan, flavoring and/or additives to said high-protein ingredient, and
j. obtaining a plant-based food product.

The present invention also relates to a plant-based food product comprising high protein ingredient obtainable with the described process, characterized in that the food product comprises a leguminous plant-based high protein ingredient that has a protein content greater than about 70 % protein/dry matter, preferably, the high protein ingredient is an isolate with a protein content in excess of about 90 % protein/dry matter, preferably at least about 100 % protein/dry matter, (N x 6.25) dry weight basis.

Thereto, the present invention concerns the plant-based food product comprising the high protein ingredient obtained with the process and wherein the product is selected from the group consisting of plant-based dairy alternatives such as gurt, yoghurts, drinkable yoghurt, crème fraiche, sour cream, sour milk, pudding, set-type yoghurt, smoothie, quark, cheese, cream cheese, ice creams, and meat analogues.

The high protein ingredient can also be used in nutritional powders, such as protein powders for athletes, and in food supplements intended for elderly or people suffering from malabsorption.

In a further embodiment of the preset disclosure, the separation of soluble proteins can be used to produce a protein ingredient with standardized concentration of plant-based protein, and/or the concentration of soluble plant-based protein, and/or concentration of non-soluble non-protein dry matter. Soluble proteins and non-soluble dry-matter are key components in determining the texture and properties of food products, in which functionalities, such as gel formation or foaming are required. By standardizing previously mentioned components according to the present process, an ingredient of consistent quality can be produced and used in various food products to ensure their invariable product quality. Selection of raw material can thus be considered more flexible, and interchangeable, e.g. raw material with lower protein content can be processed according to our invention to produce an ingredient with similar properties as one made from another raw material of different composition or quality.

The characteristic features of the invention are defined in the appended claims.

### BRIEF DESCRIPTION OF THE DRAWINGNS

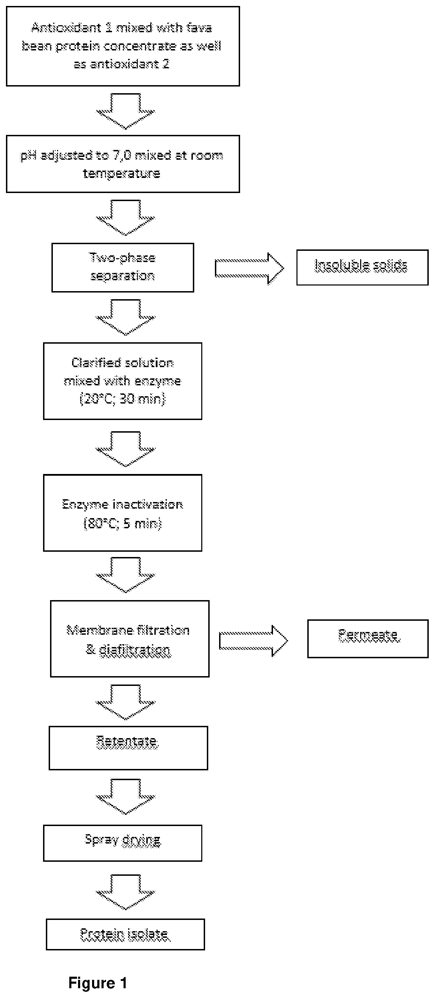

**Figure 1** is a process diagram presenting an embodiment of the process for production of leguminous-based (pulse-based) protein isolate.

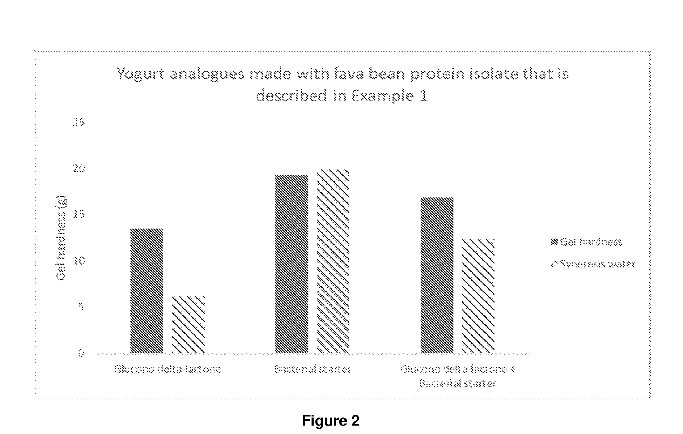

**Figure 2** is a diagram presenting gel hardness of yogurt analogue samples made with fava bean protein measured with TA.XT texture analyzer.

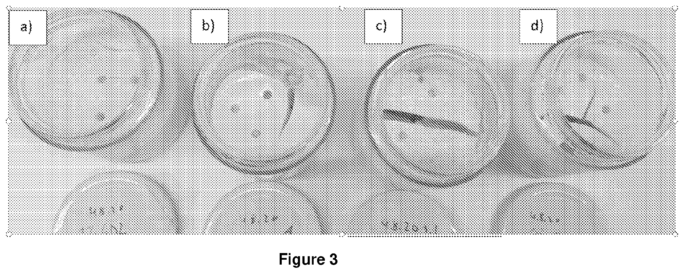

**Figure 3** is a picture showing the appearance of yogurt analogue samples: a) Yogurt analogue fermented with glucono delta-lactone, b) Yogurt analogue fermented with glucono delta-lactone, c) Yogurt analogue fermented with bacterial starter, d) Yogurt analogue fermented with bacterial starter and glucono delta-lactone.

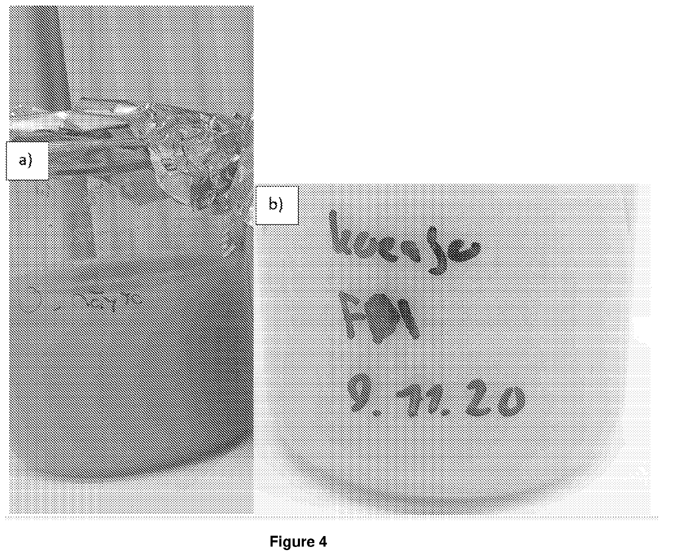

**Figure 4** is a picture showing the appearance of a) 8% fava bean protein enzyme treated suspension after heat-treatment step, as compared to the b) 10% resolubilized fava bean protein isolate produced according to the invention. The color of the suspension presented in figure a) is greyish and darker than the protein isolate presented in b), which is lighter, pale yellow, in color.

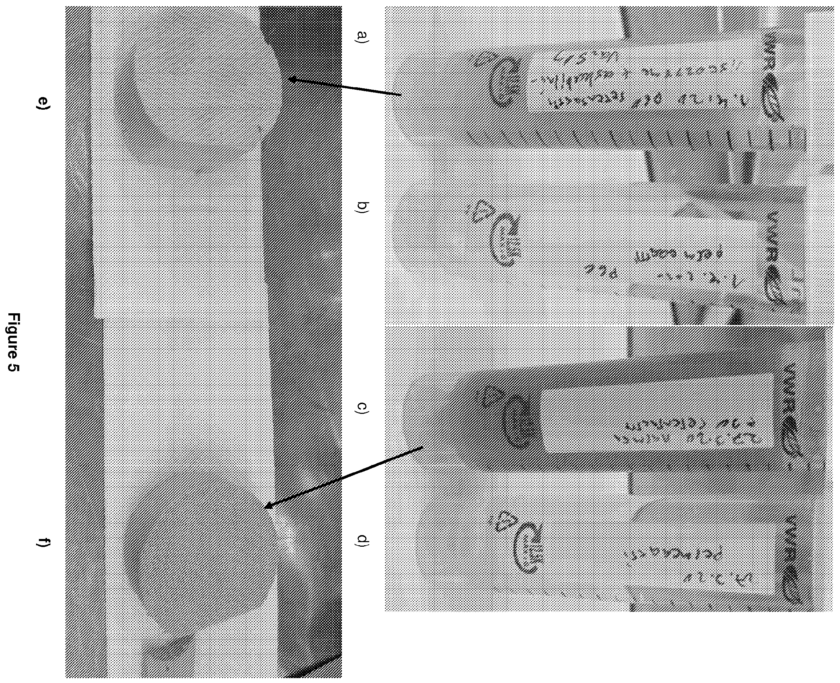

**Figure 5** presents the appearance of a) the retentate and b) the permeate from the process having air classified and enzyme (Viscozyme L) treated fava bean concentrate as a starting material. The appearance of c) the retentate and d) the permeate from the process having enzyme (Viscozyme L) treated fava bean flour as a starting material. Non-dairy cheese blocks produced from e) the air classified and enzyme (Viscozyme L) treated fava bean concentrate and f) the enzyme (Viscozyme L) treated fava bean flour are presented. Non-dairy cheese block in e) is lighter in colour than the cheese block in f).

### DEFINITIONS

In the present description and claims, the following words and expressions have meanings as defined below:
A "high-protein ingredient" refers to a protein rich ingredient that has a protein content greater than about 70 % protein/dry matter. Preferably the high-protein ingredient is an isolate with a protein content in excess of about 90 % protein/dry matter, preferably at least about 100 % protein/dry matter, (N x 6.25).

The terms "protein isolate" and "protein concentrate" differ in terms of protein quantity. These differences are caused by the processing methods. "Protein concentrate" powder consists of up to 80% protein by weight. The remaining, such as 20%, of the concentrate powder contains carbohydrates and fats. If different processing steps are used to reduce the fat and carbohydrate content, a "protein isolate" powder containing 90% or more protein by weight can be produced. Overall, the processing steps used in the production of isolate result in higher protein content and lower fat and carbohydrate content. However, the types of amino acids found in both forms of whey are virtually identical, since they are derived from the same proteins.

The term "air classification" refers to separation of materials by a combination of size, shape and density. The separation is carried out with an industrial machine, an air classifier, which works by injecting the material stream to be sorted into a chamber which contains a column of rising air. Inside the separation chamber, air drag on the objects supplies an upward force which counteracts the force of gravity and lifts the material to be sorted up into the air. Due to the dependence of air drag on object size and shape, the objects in the moving air column are sorted vertically and can be separated in this manner. Air classifiers are commonly employed in industrial processes where a large volume of mixed materials with differing physical characteristics need to be separated quickly and efficiently. Air classification is carried out e.g. in food processing.

Typically, the protein concentration of the protein concentrate produced by air classification is between 48 and 65% protein. The rest consisting of starch, fat and other polysaccharides, as well as ash.

The term "membrane process" or "membrane filtration" or "membrane filtration process" refers to microfiltration (MF), ultrafiltration (UF), nanofiltration (NF) or reverse osmosis (RO). The membrane process or membrane filtration may contain one membrane filtration. Alternatively, the membrane process or membrane filtration may contain several i.e. more than one membrane filtrations.

Microfiltration (MF) refers to separation of macromolecules. For example, if the raw material contains a large amount of fat, MF may be used to separate fat from the raw material, or to clarify the product.

Ultrafiltration (UF) refers to concentration of large and macromolecules, for example proteins.

Nanofiltration (NF) refers to concentration of organic components by removal of part of monovalent ions like sodium and chlorine (partial demineralization).

Reverse osmosis (RO) refers to concentration of solutions by removal of water. RO is applied for example if a protein-free fraction is to be recovered from the permeate, or if an aqueous fraction is to be recycled. Said recycled fraction may for example be used in diafiltration.

Diafiltration refers to a design to obtain better purification. Water is added to the feed during membrane filtration to wash out the low molecular feed components that will pass through the membranes, such as lactose and minerals. Washing means that water is added once or several times. Washing can be done as many times and as much as necessary to remove undesired components.

A "starter culture" is a microbiological culture, which performs fermentation. The starters usually consist of a cultivation medium, such as nutrient liquids that have been well colonized by the microorganisms used for the fermentation.

A "plant-based food product" may refer to fermented, acidified or non-acidic (neutral) food products, such as traditional dairy-based products like yoghurt, drinkable yoghurt, crème fraiche or sour cream, sour milk, quark, cream cheese (Philadelphia-type soft cheese), set-type yoghurt, smoothie or pudding. In the present disclosure "plant-based food product" is especially selected from the group consisting of gurt, yoghurt, drinkable yoghurt, crème fraiche, sour cream, sour milk, pudding, set-type yoghurt, smoothie, quark, cheese, cream cheese, and ice cream, preferably the product is gurt or cheese. "Plant-based food product" may also be a meat analogue.

"Plant-based" refers to originating from plants, which are suitable for manufacturing edible food products in food technology applications. The plant-based raw material suitable for the product and process of the present invention may be from at least one plant selected from leguminous plants, such as dry and fresh beans, soybeans, dry and fresh peas, lentils, chickpeas and peanuts, more preferably selected from broad bean and pea, most preferably from broad bean.

A "legume" or leguminous plant" refers to a plant belonging to the family Fabaceae (or Leguminosae), which family is commonly known as the legume, pea, or bean family. Said family is a large family of flowering plants. A legume also refers to the fruit or seed of a leguminous plant. The seed is also called a pulse. Legumes include for example alfalfa (*Medicago sativa*), clovers (*Trifolium spp*.), peas (*Pisum*), beans (*Phaseolus spp., Vigna spp., Vicia spp*.), chickpeas (*Cicer*), lentils (*Lens*), lupins (*Lupinus spp*.), mesquites (*Propsis spp*.), carob (*Ceratonia siliqua*), soybeans (*Glycine max*), peanuts (*Arachis hypogaea*), vetches (*Vicia*), tamarind (*Tamarindus indica*), kudzu (*Pueraria spp*.) and rooibos (*Aspalathus linearis*). Legumes produce a botanically unique type of fruit - a simple dry fruit that develops from a simple carpel and usually dehisces (opens along a seam) on two sides.

### DETAILED DESCRIPTION OF THE INVENTION

Commercially available plant-based protein ingredients have limitations due to their variety in quality. For example, commercial pulse protein may have unwanted taste, such as bitterness and beany flavour. Additionally, colour changes and loss of functional properties resulting in poor texture in the final product. These qualities are emphasized when producing products that mimic dairy type products, naturally neutral in colour and flavour, and whose texture is typically achieved through protein interactions. Furthermore, pulse protein ingredients may contain impurities, such as polysaccharides and insoluble proteins that interferes the structure forming properties of plant-based proteins. Overall, good functionality, neutral colour and clean taste are prerequisites developing plant-based dairy alternatives.

The present invention concerns a process for producing a plant-based food product, wherein the process comprises the steps of
a. preparing a plant protein suspension by mixing leguminous plant protein raw material, at least one antioxidant, and water to obtain an aqueous protein suspension,
b. separating insoluble solids from the aqueous protein suspension to obtain a clarified aqueous protein suspension, and an insoluble fraction,
c. treating said clarified aqueous protein suspension with at least one enzyme having tannase activity capable of modifying polyphenols originating from leguminous plant raw material, to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration to obtain a high protein ingredient as a retentate, having a protein content greater than about 70% protein/dry matter as a retentate from the membrane filtration process,
f. optionally washing the concentrated aqueous protein suspension by diafiltration,
g. obtaining a high protein ingredient having a protein content greater than about 70% protein/dry matter as a retentate from the membrane filtration process,
h. optionally, further concentrating the high protein ingredient into a protein concentrate or isolate in the form of suspension or powder,
i. fermenting and/or acidifying the high-protein ingredient, and optionally further cooling and/or adding jam, beta-glucan, flavoring and/or additives to said high-protein ingredient, and
j. obtaining a plant-based food product.

The above-mentioned steps a. to j. are preferably performed in succession.

In an embodiment, the plant protein is selected from the leguminous protein selected from dry and fresh beans, soybeans, dry and fresh peas, lentils, chickpeas and peanuts, more preferably selected form broad bean and pea, most preferably from broad bean.

In an embodiment of the present process the first step of the process involves the solubilization of leguminous or pulse protein material from a raw material. The pulse raw material may be pulses or any pulse product or by-product derived from the processing of pulses, such as pulse flour. Pulse protein source material may also be referred to as a grain legume. Suitable leguminous plants or sources for pulse raw material include e.g.
1. Dry beans (*Phaseolus*) such as kidney bean, navy bean, pinto bean, haricot bean (*Phaseolus vulgaris*); lima bean, butter bean (*Phaseolus lunatus*); azuki bean (*Vigna angularis*); mung bean, golden gram, greengram (*Vigna radiata*): black gram, urad bean (*Vigna mungo*); Scarlet runner bean (*Phaseolus coccineus*); ricebean (*Vigna umbellata*); moth bean (*Vigna aconitifolia*); and tepary bean (*Phaseolus acutifolius*),
2. Dry broad beans (*Vicia faba*) such as horse bean (*Vicia faba equina*); broad bean (*Vicia faba*); and field bean (*Vicia faba*),
3. Dry peas (*Pisum*) such as garden pea (*Pisum sativum*), protein pea (*Pisum sativum*),
4. Chickpea, garbanzo, Bengal gram (*Cicer arietinum*)*,*
5. Dry cowpea, black-eyed pea, blackeye bean (*Vigna unguiculata*),
6. Pigeon pea, Arhar/Toor, cajan pea, Congo bean, gandules (*Cajanus Cajan*),
7. Lentil (*Lens culinaris*),
8. Bambara groundnut, earth pea (*Vigna subterranea*),
9. Vetch, common vetch (*Vicia sativa*),
10. Lupins (*Lupinus*), and
11. Minor pulses such as lablab, hyacinth bean (*Lablab purpureus*); jack bean (*Canavalia ensiformis*); Sword bean (*Canavalia gladiata*); winged bean (*Psophocarpus tetragonolobus*); Velvet bean, cowitch (*Mucuna pruriens*); and yam bean (*Pachyrhizus erosus*).

According to an embodiment, the leguminous plant protein in step a. is air classified protein concentrate, or air classified protein isolate. The air classification can be performed with an industrial machine which separates plant protein material by a combination of size, shape, and density.

According to a further embodiment, the plant protein in step a. is air classified protein concentrate comprising 48 - 65 wt% of protein, the rest of said concentrate being starch, fat, polysaccharides and ash.

In air classification, most of the fibers are separated from proteins. By using air classified protein raw material, the formation of gray color may be avoided, and a pale-yellow final product is obtained.

Further, according to an embodiment the plant protein in step a. is in powder form, preferably having a particle size in the range of from 5 µm to 300 µm, more preferably in the range of from 10 µm to 275 µm.

In an embodiment, the aqueous protein suspension in step a. comprises about 1 to 40 wt.%, preferably 3 to 40 wt%, or about 5 to about 30 wt% or about 5 to 50 wt% plant protein, preferably about 6 to about 15 wt% plant protein, such as 3 to 20 wt%, even more preferably 4.5 to 10 wt% plant protein, such as 5 to 8 wt.% or 6 to 9 wt% plant protein, or 8 wt% plant protein. The aqueous protein suspension may contain such as 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt% plant protein.

In an embodiment the aqueous protein suspension is obtained by preparing plant protein suspension by mixing plant protein, at least two antioxidants, and water.

In an embodiment, the preparation in step a. and the enzyme treatment in step c. are carried out at a temperature of between 10°C and 60°C, preferably between 15°C and 50°C, more preferably between 20°C and 40°C, most preferably between 20°C and 25°C. The enzymatic treatment may be carried out at a temperature of 10, 15, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 55, or 60°C, or in the range defined by any two of these values.

In the present disclosure, protein preparation from the plant protein source material, such as leguminous or pulse material is affected by suitable additives, such as antioxidants. To achieve said effect, any convenient antioxidant can be chosen, preferably sulphites or sulphates and vitamins, more preferably sodium sulphite (Na₂SO₃) and ascorbic acid.

Further, in an embodiment, the at least one antioxidant is selected from the group consisting of sulphites, sulphates and vitamins, preferably sulphites and ascorbic acid, more preferably sodium sulphite and ascorbic acid. Other antioxidants that are suitable for use in food products may also be used alone or in any combinations.

According to an embodiment the aqueous protein suspension in step a. comprises 0.001 - 1.0 wt%, preferably 0.01 - 0.1 wt% of at least two antioxidants, such as 0.01 - 1.0 wt% sulphite salt or sulphate salt, preferably 0.02% sulphite salt or sulphate salt, and 0.01 - 0.25 % ascorbic acid, preferably 0.1% ascorbic acid. In a preferred embodiment, the sulphite salt is sodium sulphite (Na₂SO₃). In a preferred embodiment, the combination of sodium sulphite (Na₂SO₃) and ascorbic acid is used. In a preferred embodiment, 0.02% sodium sulphite (Na₂SO₃) and 0.1% ascorbic acid are used as antioxidants. The amount of the antioxidant may be such as 0.001, 0.005, 0.01, 0.02, 0.03, 0.04, 0.05, 0.06. 0.07, 0.08, 0.09, 0.1, 0.2, 0.3, 0.4, 0.5, 0.6, 0.7, 0.8, 0.9, or 1.0 wt%.

Antioxidants are known to inhibit internal enzyme activity, such as lipoxygenase, polyphenol oxidase and lipase present in plants, such as leguminous plants, and off-colouring.

According to an embodiment, the preparation of suspension in step a. and the enzyme treatment in step c. are carried out at a pH of about pH 4.5 to about pH 11, preferably from about pH 6.0 to about pH 7.0, such as at pH 6.1, 6.2, 6.3, 6.4, 6.5, 6.6, 6.7, 6.8, 6.9, or in the range defined by any two of these values. In a preferred embodiment, pH is adjusted to pH 7.0. For pH adjustment, any food grade alkali can be used, e.g. sodium hydroxide or potassium hydroxide, as required. Still in an embodiment, the preparation in step a. is carried out from 10 minutes to 4 hours, preferably from 20 minutes to 3 hours, more preferably from 30 minutes to 2 hours, most preferably 90 minutes. The preparation is carried out for a time sufficient to ensure a homogeneous suspension is obtained. The preparation time may be 10, 20, 30, 40, 50, 60, or 90 minutes, 1, 2, 3, or 4 hours.

Typically, in step b. the aqueous phase resulting from the extraction step a. may be separated from the insoluble residual protein source, in any convenient manner. Such as a decanter centrifuge, followed by disc centrifugation and/or filtration, to remove pulse protein source material from the aqueous phase containing soluble proteins may be employed. In the separation step b. 80-100% of insoluble non-suspended solids are separated from the clarified aqueous proteins suspension. In the further clarification step residual insoluble non-suspended solids can be removed that the concentration of insoluble non-suspended solids is at least less than 0.2%.

In one preferred embodiment the suspension is clarified by removal of insoluble solids with a decanter centrifuge and nozzle-bowl separator. The separation step can be conducted at the same temperature as the protein solubilization step.

In an embodiment the clarified aqueous phase resulting from the separation step b. is enzyme treated with at least one suitable enzyme capable of modifying polyphenols originating from plant raw material. The at least one enzyme may be an enzyme mix that contains hydrolase enzyme main or side activity, such as carboxylic-ester hydrolase or naringinase, which contains alpha-L-rhamnosidase and beta-D-glucosidase activities. Carboxylic-ester hydrolase hydrolases polyphenolic compounds, such as tannins and saponins. Alpha-L-rhamnosidase and naringinase hydrolyses naringin, rutin, quercitrin, hesperidin, dioscin, terpenyl glycosides and many other natural glycosides containing terminal alpha-L-rhamnose. To remove off-tastes, such as bitterness. The quantity of enzyme dosage employed in the enzyme treatment phase depends on the pulse protein source material. Optionally enzyme or enzyme mix can include other main or side activity such as pectinases, hemicellulase, xylanase, beta-glucanase, mannanase, glucanase and amylases for example glucoamylase, isoamylases, alpha-amylase and beta-amylase.

In an embodiment at least one enzyme capable of modifying polyphenols originating from plant raw material may be used.

In an embodiment at least one enzyme capable of modifying polyphenols comprises an enzyme mixture of a carbohydrase and cellulase and mixture thereof.

The bitterness can be removed by using an enzyme or enzyme mix that contains hydrolase enzyme activity, such as carboxylic ester hydrolase, such as tannase (EC 3.1.1.20, tannin acylhydrolase) or naringinase (E.C. 3.2.1.40) activity. For example, a multienzyme complex, containing wide range of carbohydrates including beta-glucanase(s), pectinase(s), cellulase(s), hemicellulose(s) and/or xylanase(s) can be used in the process of the present disclosure. Preferably, the enzyme mixture comprises tannase activity. The combination of enzymes may be such as tannase with beta-glucanase, pectinase, hemicellulase or xylanase, or any combination thereof. In an embodiment an enzyme mixture which comprises a mixture of a cellulase and carbohydrase, or mixture of a cellulase and carbohydrase type enzyme is used.

A carbohydrase that can be used in the present invention is Viscozyme^{®} L available from Novozymes. Viscozyme^{®} L is a blend, or a multienzyme complex, containing wide range of carbohydrases including arabinose, cellulase, beta-glucanases, pectinases, hemicellulases and xylanases and is generally derived from *Aspergillus.* Viscozyme^{®} L also has tannase activity.

Surprisingly, by using said multienzyme complex, such as Viscozyme^{®} L, two desired results are obtained, namely the cleavage of carbohydrate structures which releases proteins and the cleavage of tannins which improves taste and color. Viscozyme^{®} L degrades for example long carbohydrate and/or polyphenol structures.

In one preferred embodiment the enzyme or the enzyme mixture comprises tannase, such as 0.1 wt% tannase is used. For example, Viscozyme L enzyme mixture having tannase activity can be used.

One combination may be a mixture of tannase, pectinase and cellulase, or tannase and pectinase, or tannase and cellulase.

According to an embodiment, in step c. the enzyme treatment is carried out from 5 minutes to 2 hours, preferably from 10 minutes to 1 hour, more preferably for 30 minutes. In one preferred embodiment enzyme treatment is carried out by incubating for 30 min at room temperature under constant mixing. The enzymatic treatment may be carried out for 5, 6, 7, 8, 9, 10, 15, 20, 25, 30, 35, 40 ,45, 50, 55 or 60 minutes, or for 1 or 2 hours.

In an embodiment, the enzymatic treatment is carried out after the separation step, such as after centrifugation.

According to an embodiment, in the enzyme treatment step c. the enzyme or enzyme mixture further includes activity of enzymes, as main or said activity, selected from the group consisting of enzyme activities of pectinases, hemicellulose, xylanase, beta-glucanase, mannase, glucanase and amylases for example glucoamylase, isoamylase, alpha-amylase and beta-amylase.

Typically, in the enzyme treatment step c. the enzyme is used in amount of 0.0001 - 10 wt% on dry matter basis, preferably 0.001 - 5 wt% on dry matter basis, more preferably 0.01 - 2 wt% on dry matter basis, most preferably 0.1 wt% on dry matter basis. The amount of enzyme may be 0.0001, 0.0005, 0.001, 0.005, 0.01, 0.02, 0.03, 0.04, 0.05, 0.06, 0.07, 0.08, 0.09, 1.0, 1.1, 1.2, 1.3, 1.4, 1.5, 1.6, 1.7, 1.8, 1.9, 2.0, 2.5, 3.0, 3.5, 4.0, 4.5, 5, 6, 7, 8, or 9 wt% on dry matter basis.

The enzyme treated aqueous pulse protein solution is subjected to a heat treatment to inactivate the enzyme and heat labile anti-nutritional factors, such as trypsin inhibitors, present in the solution. Heating step also provides the additional benefit of reducing the microbial load. Generally, the protein solution is heated to a temperature of about 50° to about 160°C, preferably about 60° to about 120°C, more preferably about 75°C to about 80°C, for about 10 seconds to about 60 minutes, preferably about 10 seconds to about 5 minutes, more preferably about 5 minutes. In one preferred embodiment heat-treatment is carried out at a temperature of 80°C for 5 minutes. The heat-treated pulse protein solution then may be cooled for further processing.

The heat treatment may be carried out at a temperature of 50, 55, 60, 65, 70, 75, 80, 90, 100, 110, 120, 130, 140, 150, or 160°C, or in the range defined by any two of these values. The heat treatment may be carried out for 10 seconds, or 1, 2, 3, 4, 5, 6, 7, 8, 9, 10, 15, 20, 25, 30 ,35, 40, 45, 50, 55, or 60 minutes, or in the range defined by any two of these values.

Further, in step d. the heat-treatment is carried out at a temperature of about 60°C to about 120°C, preferably about 75°C to about 80°C, for about 10 seconds to about 60 minutes, preferably about 10 seconds to about 5 minutes, more preferably about 5 minutes.

In an embodiment the heat-treatment is carried out at a temperature of about 60°C to about 135°C, preferably from about 60°C to about 120°C, more preferably from about 75°C to about 80°C, for about 2 seconds to about 60 minutes, preferably from about 10 seconds to about 60 minutes, preferably about 10 seconds to about 5 minutes, more preferably about 5 minutes.

In an embodiment the heat-treatment is carried out at a temperature of about 135°C for about 2 to 5 seconds.

Heating in step d. may be carried out by heating the suspension, by adding hot water to the suspension, or by using conventional techniques known in the art, such as a plate heat exchanger, tubular heat exchanger or jacket.

Optional cooling step may be carried out after the heating step d. A suitable temperature of the cooling step depends on how the following concentration step e. is performed or acidification is performed or not. If concentration is performed with a membrane process, using heat sensitive membranes, the suitable cooling temperature can be 5 to 60 °C. For other membrane types, such as ceramic ones, or further concentration methods, such as evaporation, higher temperatures may be applied.

If acidification or fermentation is performed after concentration, the suitable cooling temperature depends on the starter culture. For example, 38 to 45 °C for thermophilic cultures and for example 28 to 32 °C for mesophilic cultures. Other temperatures may also be suitable.

According to an embodiment, in step e., the aqueous solution can be further concentrated by suitable membrane process, such as microfiltration, ultrafiltration, nanofiltration or reverse osmosis. Said membrane process can be used to separate certain components from aqueous protein solution and the membrane type can be chosen depending on the desired composition of the final product. For example for high purity protein product, with low amount of small molecular weight impurities, e.g. salts, an ultrafiltration membrane with molecular weight cut-off (MWCO) of 1 to 100 kDa, preferably 5 to 20 kDa, more preferably 5, 6, 7, 8, 9, 10, 11, 12, 13, 14, 15, 16, 17, 18, 19, or 20 kDa or a range defined by any two of these values is preferred. Or the membrane type having nominal pore size below 0.1 µm, more preferably below 0.01 µm, would be preferred. Different membrane types, such as spiral wound, hollow fiber, flat sheet, etc. can be applied. Likewise, said membrane process can be operated in a way deemed suitable to reach the desired outcome, e.g. batchwise, semi-batchwise, continuously, etc.

In one preferred embodiment heat-treated suspension is concentrated with ultrafiltration. In a further preferred embodiment heat-treated suspension is concentrated with ultrafiltration using 10 kDa spiral-wound membrane and rinsed with diafiltration.

Diafiltration can be applied to further assist in separation of permeable compounds from concentrate produced in a membrane process of previous description. The concentrated retentate has a dry matter content of 5 - 30 wt%, preferably at least 10 - 20 wt%, more preferably at least 12 - 18 wt%. The dry matter content of the concentrated retentate may be 5, 6, 7, 8, 9, 10, 11, 12, 13, 14, 15, 16, 17, 18, 19, 20, 21, 22, 23, 24, 25, 26, 27, 28, 29, or 30 wt%.

In an embodiment the diafiltration step f. may contain one or more diafiltrations and/or diafiltration steps.

The concentrated retentate has a protein content greater than about 70 wt% in dry matter. Preferably, the concentrated retentate has a protein content 80 to 100 wt% protein in dry matter. Still in an embodiment, in step f., optionally other concentration methods can be used, such as evaporation or centrifugation. The protein content of the concentrated retentate has a protein content of 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 wt%.

In an embodiment, in step e. the membrane process or membrane filtration is microfiltration, ultrafiltration, nanofiltration or reverse osmosis.

According to an embodiment, in step h. a further concentration is carried out using evaporation or centrifugation.

Typically, concentration and washing steps are carried out to separate a retentate and a permeate.

According to an embodiment, the process further comprises after step f. a pasteurization step, which is carried out at a temperature of about 55°C to about 70°C, preferably about 60°C to about 65°C, for about 30 seconds to about 60 minutes, preferably about 10 minutes to about 15 minutes.

Heat treatment step may be pasteurization, which may be carried out at a temperature of about 75°C to about 105°C for about 30 seconds to about 5 minutes, preferably the pasteurization is carried out at a temperature of about 75°C for about 30 seconds to about 5 minutes, preferably for about 5 minutes.

The pasteurized concentrated plant protein suspension then may be cooled for drying, preferably to a temperature of about 25° to about 40°C.

Typically, the process further comprises after step f. and after optional pasteurization and cooling steps drying the obtained aqueous protein solution, preferably using spray drying. In a preferred embodiment protein solution or protein concentrate is spray dried to produce protein isolate or high protein ingredient.

The concentrated and diafiltered aqueous plant protein suspension may be dried by any convenient technique, such as spray drying, drum drying or freeze drying. A pasteurization step may be applied on the plant protein suspension prior to drying, to ensure good microbiological quality. Such heat treatment may be applied under any desired time and temperature conditions. Generally, the concentrated and diafiltered plant protein suspension is heated to a temperature of about 55°C to about 70°C, preferably about 60°C to about 65°C, for about 30 seconds to about 60 minutes, preferably about 10 minutes to about 15 minutes.

In an embodiment, the process further comprises after step f. and after optional pasteurization step cooling of the aqueous protein suspension to a temperature of about 25°C to about 40°C. The cooling temperature may be 25, 30, 35, or 40°C, or in the range defined by any two of these values.

Still, in an embodiment the process further comprises after step f. and after optional pasteurization and cooling steps drying the obtained aqueous protein suspension, preferably using spray drying.

In an embodiment, the present invention concerns a process for producing a plant-based food product, wherein the process comprises the following steps of
a. preparing a plant protein suspension by mixing leguminous plant protein raw material, at least one antioxidant, and water to obtain an aqueous protein suspension,
b. separating insoluble solids from the aqueous protein suspension to obtain a clarified aqueous protein suspension,
c. treating said clarified aqueous protein suspension with at least one enzyme having tannase activity capable of modifying polyphenols originating from leguminous plant raw material, to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration process to obtain a high protein ingredient having a protein content greater than about 70% protein/dry matter as a retentate from the membrane filtration process,
f. optionally washing the concentrated aqueous protein suspension by diafiltration,
g. optionally, further concentrating the high protein ingredient into a protein concentrate or isolate in the form of suspension or powder,
h. fermenting and/or acidifying the high-protein ingredient, and optionally further cooling and/or adding jam, beta-glucan, flavoring and/or additives to said high-protein ingredient, and
i. obtaining a plant-based food product.

In an embodiment, the present invention concerns a process for producing a plant-based food product, wherein the process comprises the following steps of
a. preparing a plant protein suspension by mixing leguminous plant protein raw material, at least one antioxidant, and water to obtain an aqueous protein suspension,
b. separating insoluble solids from the aqueous protein suspension to obtain a clarified aqueous protein suspension,
c. treating said clarified aqueous protein suspension with at least one enzyme having tannase activity capable of modifying polyphenols originating from leguminous plant raw material, to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration process to obtain a high protein ingredient having a protein content greater than about 70% protein/dry matter as a retentate from the membrane filtration process,
f. fermenting and/or acidifying the high-protein ingredient, and optionally further cooling and/or adding jam, beta-glucan, flavoring and/or additives to said high-protein ingredient, and
g. obtaining a plant-based food product.

In an embodiment, the present invention concerns a process for producing a plant-based food product, wherein the process comprises the following steps of
a. preparing a plant protein suspension by mixing leguminous plant protein raw material, at least one antioxidant, and water to obtain an aqueous protein suspension,
b. separating insoluble solids from the aqueous protein suspension to obtain a clarified aqueous protein suspension,
c. treating said clarified aqueous protein suspension with at least one enzyme having tannase activity capable of modifying polyphenols originating from leguminous plant raw material, to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration process to obtain a high protein ingredient having a protein content greater than about 70% protein/dry matter as a retentate from the membrane filtration process,
f. washing the concentrated aqueous protein suspension by diafiltration,
g. further concentrating the high protein ingredient into a protein concentrate or isolate in the form of suspension or powder,
h. fermenting and/or acidifying the high-protein ingredient, and optionally further cooling and/or adding jam, beta-glucan, flavoring and/or additives to said high-protein ingredient, and
i. obtaining a plant-based food product.

In an embodiment, the present invention concerns a process for producing a plant-based food product, wherein the process comprises the following steps of
a. preparing a plant protein suspension by mixing leguminous plant protein raw material, sodium sulphite (Na₂SO₃), ascorbic acid, and water to obtain an aqueous protein suspension,
b. separating insoluble non-suspended solids from the aqueous protein suspension to obtain a clarified aqueous protein suspension,
c. treating said clarified aqueous protein suspension with an enzyme mixture of a carbohydrase and cellulase and comprising tannase activity to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration process to obtain a high protein ingredient having a protein content greater than about 70% protein/dry matter as a retentate from the membrane filtration process,
f. optionally washing the concentrated aqueous protein suspension by diafiltration,
g. optionally, further concentrating the high protein ingredient into a protein concentrate or isolate in the form of suspension or powder,
h. fermenting and/or acidifying the high-protein ingredient, and optionally further cooling and/or adding jam, beta-glucan, flavoring and/or additives to said high-protein ingredient, and
i. obtaining a plant-based food product.

In an embodiment, the present invention concerns a process for producing a plant-based food product, wherein the process comprises the following steps of
a. preparing a plant protein suspension by mixing 5 - 30 wt%, preferably 6 - 15 wt%, more preferably 8 wt% of leguminous plant protein raw material, 0.01 - 1.0 wt%, preferably 0.02 wt% sodium sulphite (Na₂SO₃), 0.01 - 0.25 wt% , preferably 0.1 wt% ascorbic acid, and water at a pH from about pH 4.5 to pH about 11, preferably from about pH 6.0 to about pH 7.0, at a temperature of between 10°C and 60°C, preferably between 15°C and 50°C, more preferably between 20°C and 40°C, most preferably between 20°C and 25°C, from 10 minutes to 4 hours, preferably from 20 minutes to 3 hours, more preferably from 30 minutes to 2 hours, most preferably 90 minutes to obtain an aqueous protein suspension,
b. separating insoluble non-suspended solids from the aqueous protein suspension to obtain a clarified aqueous protein suspension,
c. treating said clarified aqueous protein suspension with an enzyme mixture of a carbohydrase and cellulase and comprising tannase acticity in an amount of 0.0001 - 10 wt%, preferably 0.001 - 5 wt%, more preferably 0.01 - 2 wt%, most preferably 0.1 wt% at a pH from about pH 4.5 to pH about 11, preferably from about pH 6.0 to about pH 7.0 at a temperature of between 10°C and 60°C, preferably between 15°C and 50°C, more preferably between 20°C and 40°C, most preferably between 20°C and 25°C from 5 minutes to 2 hours, preferably from 10 minutes to 1 hour, more preferably for 30 minutes to obtain an enzyme-treated aqueous protein suspension,
d. subjecting the enzyme-treated aqueous protein suspension to a heat treatment at a temperature of about 50°C to about 160 °C, preferably at about 60° to about 120°C, preferably at about 75° to about 80°C, for about 10 seconds to about 60 minutes, preferably for about 10 seconds to about 5 minutes, more preferably about for 5 minutes to obtain a heat-treated aqueous protein suspension,
e. concentrating the heat-treated aqueous protein suspension using ultramembrane filtration process to obtain a high protein ingredient having a protein content greater than about 70% protein/dry matter as a retentate from the membrane filtration process,
f. optionally washing the concentrated aqueous protein suspension by diafiltration,
g. optionally, further concentrating the high protein ingredient into a protein concentrate or isolate in the form of suspension or powder,
h. fermenting and/or acidifying the high-protein ingredient, and optionally further cooling and/or adding jam, beta-glucan, flavoring and/or additives to said high-protein ingredient, and
i. obtaining a plant-based food product.

In an embodiment, the present invention concerns a process for producing a plant-based food product, wherein the process comprises the following steps of
a. preparing a plant protein suspension by mixing 6 - 15 wt%, preferably 8 wt% of leguminous plant protein raw material, 0.01 - 1.0 wt%, preferably 0.02 wt% sodium sulphite (Na₂SO₃), 0.01 - 0.25 wt% , preferably 0.1 wt% ascorbic acid, and water at a pH from about pH 6.0 to about pH 7.0, at a temperature between 15°C and 50°C, more preferably between 20°C and 40°C, most preferably between 20°C and 25°C, from 10 minutes to 4 hours, preferably from 20 minutes to 3 hours, more preferably from 30 minutes to 2 hours, most preferably 90 minutes to obtain an aqueous protein suspension,
b. separating insoluble solids from the aqueous protein suspension to obtain a clarified aqueous protein suspension,
c. treating said clarified aqueous protein suspension with an enzyme mixture of a carbohydrase and cellulase in an amount of 0.0001 - 10 wt%, preferably 0.001 - 5 wt%, more preferably 0.01 - 2 wt%, most preferably 0.1 wt% and the enzyme mixture comprising tannase activity at a pH from about pH 6.0 to about pH 7.0 at a temperature of 15°C and 50°C, more preferably between 20°C and 40°C, most preferably between 20°C and 25°C from 5 minutes to 2 hours, preferably from 10 minutes to 1 hour, more preferably for 30 minutes to obtain an enzyme-treated aqueous protein suspension,
d. subjecting the enzyme-treated aqueous protein suspension to a heat treatment at a temperature of about 75° to about 80°C, for about 10 seconds to about 5 minutes, more preferably about for 5 minutes to obtain a heat-treated aqueous protein suspension,
e. concentrating the heat-treated aqueous protein suspension using ultramembrane filtration process to obtain a high protein ingredient having a protein content greater than about 70% protein/dry matter as a retentate from the membrane filtration process,
f. optionally washing the concentrated aqueous protein suspension by diafiltration,
g. optionally, further concentrating the high protein ingredient into a protein concentrate or isolate in the form of suspension or powder,
h. fermenting and/or acidifying the high-protein ingredient, and optionally further cooling and/or adding jam, beta-glucan, flavoring and/or additives to said high-protein ingredient, and
i. obtaining a plant-based food product.

The protein isolate retains native functional properties, such as neutral colour and with little, or no, perceived bitterness, making the product ideal raw material for numerous food products and applications, such as yogurts, cheeses, meat analogues, ice creams and other plant-based dairy alternatives.

The dry plant protein product has a protein content greater than about 70 wt%. Preferably, the dry plant protein product is an isolate with a protein content in excess of about 90 wt% protein, preferably at least about 100 wt%, (N x 6.25) dry weight basis. Nitrogen is converted to protein percent by using coefficient 6,25.

In an embodiment, the process results in a plant-based food product comprising a high protein ingredient that has a protein content greater than about 70 % protein/dry matter, preferably, the high protein ingredient is an isolate with a protein content in excess of about 90 % protein/dry matter, preferably at least about 100 % protein/dry matter, (N x 6.25) dry weight basis. The plant-based protein ingredient has improved organoleptic and functional properties, such as reduced bitterness and improved gelation properties in dairy product analogues. The improved organoleptic properties were achieved by reduced concentration of polyphenolic compounds. Polyphenolic compounds can be for example tannins. Polyphenolic concentration of ingredient is significantly lower than in the starting raw material.

In an embodiment a high protein ingredient having a protein content greater than about 70 % protein/dry matter, preferably the high-protein ingredient is an isolate with a protein content in excess of about 90 % protein/dry matter, preferably at least about 100 % protein/dry matter, (N x 6.25) dry weight basis is obtained.

In an embodiment, the present disclosure relates to a plant-based food product comprising a leguminous plant-based high protein ingredient having a protein content greater than about 70 % protein/dry matter, preferably the high-protein ingredient is an isolate with a protein content in excess of about 90 % protein/dry matter, preferably at least about 100 % protein/dry matter, (N x 6.25) dry weight basis, and the high protein ingredient has neutral color and no perceived bitterness.

In an embodiment a plant-based product comprising the high protein ingredient obtained with the above process is suitable for use in a product selected from the group consisting of plant-based dairy alternatives such as gurt, yoghurts, drinkable yoghurt, crème fraiche, sour cream, sour milk, pudding, set-type yoghurt, smoothie, quark, cheese, cream cheese, ice creams, and meat analogues.

In an embodiment a plant-based product further comprises viable bacteria and/or probiotics.

In an embodiment the aqueous protein solution obtained in step f. or high protein ingredient is further processed with fermentation. This may be done with bacterial or chemical fermentation, or with a combination of bacterial and chemical fermentation.

In one preferred embodiment a yogurt analogue is produced. In one preferred embodiment the aqueous protein solution is mixed with water, coconut oil and sugar, heated to 50°C and homogenized with lab homogenizer at 150 to 160 bars and pasteurized at 85°C for 5 minutes in a water bath. After pasteurization protein suspension is cooled to 40°C and 0.08% microbial starter culture and 1% of glucono delta-lactone are added to the suspension. The fermentation is conducted at 38°C for 2 hours until target pH is achieved, which is < pH 5. The produced yogurt analogues have specific characteristics, such as white colour resembling of milk and spoonable texture, gel hardness of yogurt analogue samples were measured by TA.XT, as illustrated in Figure 3.

The texture of a product, such as cheese, can be measured by TA.XT texture analyzer, performing a compression test. A compression test is the most simple and popular test of instrumental texture measurement. A sample is placed on a flat surface and a flat platen is lowered onto the sample to a given force or distance. Sample is deformed and the extent of the deformation and/or the resistance offered by the sample is recorded. Hardness, springiness (elasticity) and gumminess are measured.

Hardness is the force required to penetrate the sample to depth of 1 cm. For example, P05 probe can be used.

In one preferred embodiment a vegan cheese is produced. The protein isolate is mixed with water and other raw materials (such as fat, sugar, salt and food colour) are added into the mixture. The mixture is heated to 60°C and homogenized at 150 bar. The mixture is further pasteurized at 75°C, for 5 min and cooled down to incubation temperature (45°C). Then the microbial starter culture, ascorbic acid and flavor are added, and the mixture is fermented for about 30 min to pH 6.0. After that transglutaminase enzyme is added, the mixture is poured to coagulation molds and the mixture is coagulated for 2 hours to pH 5,0. The mass is further hardened in cold store (4-6°C) around 12 hours. The cheese mass is then moved to pressing molds and the excess whey is pressed out by a hydraulic press (9 bar 4-6 hours). After pressing the vegan cheeses are dry salted.

According to one embodiment, the process comprises adding transglutaminase (TG) enzyme to the suspension in an amount of 0.1 - 5 u per 1 g protein, preferably 0.1 - 1 U per 1 g protein, more preferably 0.3 - 0.6 U per 1 g protein, most preferably 0.4 - 0.5 U per 1 g protein. If the plant-based product is fermented, the TG enzyme is preferably added before or at the same time as the starter culture. If the plant-based product is acidified, i.e. not fermented, the TG enzyme may be added after the heat-treatment and the cooling step.

The raw material in step a., when providing a suspension containing protein, is typically a meal or in powder form. The particle size of the powder is typically in the range of 5 to 300 µm, preferably 10 to 275 µm. Meal preferably has a particle size with a D90 value of 150 µm, i.e. 90% of the particles are smaller than 150 µm. In one embodiment, 100% of the particles have a particle size below 275 µm. In one embodiment, 90% of the particles have a particle size below 150 µm and in one embodiment, 50% of the particles have a particle size below 10 µm. The appropriate particle size will also ensure processability of the powder and the suspension formed in step a. of the process. The powder should not form lumps, because that would cause problems in the production line and reduce the quality of the plant-based food product.

Thus, according to one embodiment, the plant-based raw material is in powder form. According to one embodiment of the process of the invention, the plant-based raw material is a powder having a particle size of 5 to 300 µm, preferably 10 to 275 µm. In one embodiment, 90% of the particles are smaller than 150 µm.

Other pre-treatment steps may be required or useful depending on the raw material.

According to one embodiment of the invention, the process comprises adding at least one starter culture to the suspension and fermenting the mixture until it reaches a pH value of 4 to 4.9, preferably 4.5, to obtain a fermented plant-based food product.

Thus, according to one embodiment, the process of the invention comprises a fermentation step. The fermentation step produces an acidic fermented product. In the fermentation step of the process of the present invention, known cultures, such as conventional starter cultures for dairy-based products, may be used for inoculation of the mixture to be fermented. The bacteria may be mesophilic and/or thermophilic. Biological acidifiers, e.g. a bulk starter or DVS starter (direct to vat starter) may be used. The starter culture may be selected from the group consisting of *Streptococcus thermophilus, Lactobacillus bulcaricus, Lactobacillus acidophilus, Bifodobacteria, Lactobacillus rhamnosus, Lactobacillus casei, Lactococcus lactis, Leuconostoc citreum, Leuconostoc mesenteroides*/ *pseudomesenteroides, Leuconostoc mesenteroides, Lactobacillus plantarum, Lactobacillus amylolyticus, Lactobacillus amylovorus, Lactobacillus delbrueckii subsp. delbrueckii, Lactobacilus rhamnosus GG, Bifidobacterium animalis subsp. lactis ,* and *Lactobacillus acidophilus.* Preferably, the starter culture is selected from the group consisting of *Lactobacillus acidophilus, Bifodobacteria* and *Lactobacillus rhamnosus.* The fermentation is performed after the heat treatment step.

According to one embodiment, the plant-based product of the invention comprises viable bacteria and/or probiotics.

According to one embodiment of the invention, step a. of the process further comprises adding sugar in an amount of 1 to 5 wt.%, preferably 2 to 4 wt.% based on the total weight of the suspension, and optionally other ingredients such as oil, salt, minerals, such as calcium carbonate and tricalcium phosphate, and vitamins.

The protein content of the plant-based product according to the invention is typically 0.5 to 20 wt. % based on the total weight of the product. The protein content may also be 0.5 to 12 wt.%, or 0.5 to 10 wt. %, or 1 to 8 wt. %, or 2 to 6 wt.% based on the total weight of the product. The protein content refers to the plant-based product before optional addition of jam or other constituents.

In order to produce a fermented product with stirred, smooth and desirable texture, the yoghurt can be cooled and post-processed with a texturing unit, such as a stretching unit.

Additionally, stabilizers and texture enhancing ingredients can be applied, such as pectin or starch-based ingredients, gellan gum, carrageenan, locust bean gum, xanthan gum, konjac gum, all hydrocolloids of viscosity, stability or structure.

For a fermented product with set-type structure, fermentation is carried out after product has been packed in its final package, utilizing a heating chamber, or other suitable temperature control to maintain suitable temperature for chosen culture.

For a strained type fermented product, such as Greek-style yoghurt or quark, the fermented product is concentrated by suitable means, such as membrane filtration, centrifugal separation or gravitational straining.

In the end of the process, the obtained plant-based food product regardless of the product sub-type described above, is typically packed and cooled to a storage temperature of 2 to 6°C.

In order to control the sensory acidity of the fermented product, disregarding its product type, the buffering capacity can be adjusted before fermentation with suitable buffering agent, or ingredient. Such ingredient can be chosen from numerous options available for food use, including citrates, phosphates, lactates, or others. Addition of such ingredient will result in higher concentration of acid produced during fermentation and thus more acidic taste.

The present invention is further illustrated with the following examples.

### EXAMPLES

### Example 1

This Example evaluates the protein extractability from fava bean and the effect of enzymatic treatment on the clarity and taste of protein solutions resulting from the concentration step.

0.02 wt% sodium sulphite (Na₂SO₃) was solubilized in water with 8 wt% air classified fava bean protein concentrate flour after mixing, 0.1% ascorbic acid was solubilized into the suspension. pH of the suspension was adjusted to 7.0 using sodium hydroxide and suspension was then mixed at room temperature for 90 minutes. The suspension was clarified by removal of insoluble solids with a decanter centrifuge and nozzle-bowl separator. The clarified suspension was enzyme treated by adding 0.1% of a commercial enzyme with known tannase activity (Viscozyme L, Novozymes) and incubated 30 min at room temperature under constant mixing. After this enzyme is inactivated by heat-treatment at 80°C for 5 minutes. Heat-treated suspension was then concentrated with ultrafiltration using 10 kDa spiral-wound membrane and rinsed with diafiltration. Subsequently, concentrated fava bean protein retentate was then spray dried to produce fava bean protein isolate with protein content of 90 wt% /dry matter.

### Example 2

In order to evaluate decreased perceived bitterness of fava bean protein isolate described in Example 1. The sensory analysis was conducted using two-alternative forced choice test method (ISO 5495:2005).

The processed fava bean isolate was resuspended in water at 8% concentration. This sample was compared to 8% fava bean protein concentrate water suspension and centrifugated clarified 8% fava bean protein concentrate water suspension. Sensory evaluation results presented in Table 1.

**Table 1. Results of two-alternative forced choice test, sensory appraisals evaluated bitterness between the tested samples.**

| | Fava bean protein isolate water suspension described | Fava bean protein isolate water suspension described |
|---|---|---|
| | Example 1 compared to 8% fava bean protein concentrate water suspension (n = 17) | Example 1 compared to 8% clarified fava bean protein concentrate water suspension (n = 16) |
| 0 = no difference | 0 | 0 |
| 1 = slight difference | 2 | 5 |
| 2 = distinct difference | 10 | 9 |
| 3 = very distinct difference | 4 | 3 |
| Average | 2.1 | 1.9 |
| p-value | 0.0004 | 0.002 |

### Example 3

In order to determine structural forming properties of the fava bean isolate described in Example 1, protein isolate was further processed with fermentation, this was done with combination bacterial and chemical fermentation to set-type produce yogurt analogue. Set-type yogurt analogue was produced as follows. 400 grams batch of pre-mix was prepared with following recipe (Table 2) 390 grams of fava bean retentate was mixed with 376 grams of tap water as well as 10 grams of coconut oil and 24 grams table sugar were mixed into the suspension. Fava bean protein suspension was heated to 50°C and homogenized with lab homogenizer at 150 to 160 bars and pasteurized at 85°C for 5 minutes in a water bath. After pasteurization fava bean protein suspension was cooled to 40°C and divided 150 grams batches and 0.08% microbial starter culture and 1% of glucono delta-lactone were added to the suspension. The fermentation was conducted at 38°C for 2 hours until target pH was achieved, which was < pH 5. The produced yogurt analogues had specific characteristics, such as white colour resembling of milk and spoonable texture. Gel hardness of yogurt analogue samples was measured by TA.XT texture analyser and results thereof are illustrated in Figure 2. The probe P05 was used.

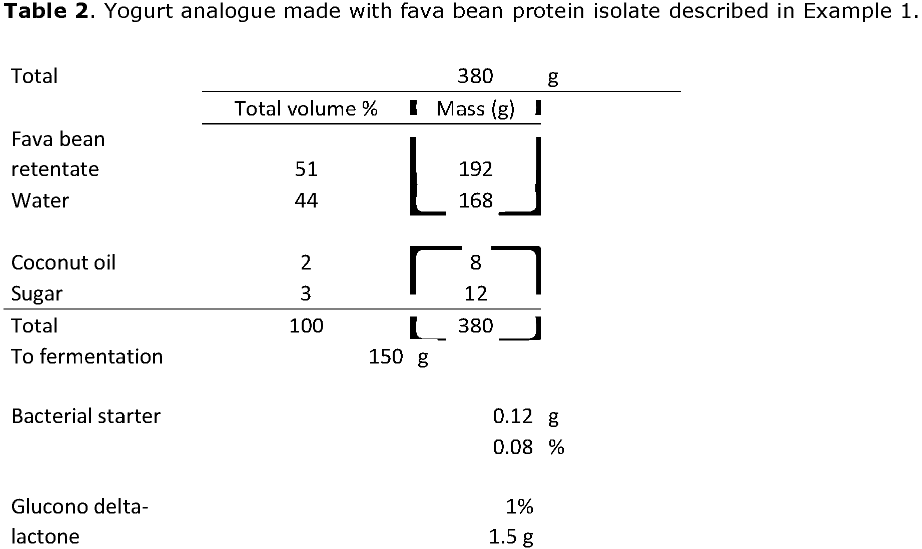

### Example 4

In order to determine structural forming properties of the produced fava bean protein isolate in Example 1 the fava bean protein isolate was tested in a vegan cheese application. The fava bean protein isolate was mixed with water and other raw materials (fat, sugar, salt and food colour) were added into the mixture. The mixture was heated to 60°C and homogenized at 150 bar. The mixture was further pasteurized at 75°C, for 5 min and cooled down to incubation temperature (45°C). Then the microbial starter culture, ascorbic acid and flavor were added, and the mixture was fermented about 30 min to pH 6.0. After that transglutaminase enzyme was added, the mixture was poured to coagulation molds and the mixture was coagulated for 2 hours to pH 5,0. The mass was further hardened in cold store (4-6°C) around 12 hours. The cheese mass was then moved to pressing molds and the excess whey was pressed out by a hydraulic press (9 bar 4-6 hours). After pressing the vegan cheeses were dry salted.

### Example 5

In order to produce a yoghurt-like product 760 g of fava bean concentrate, produced as described in Example 1, was first combined with 100 g of tap water solution containing 50 g of sucrose and 5 g pectin. Combined fava bean protein, sucrose and pectin solution was heated to 50°C and mixed with 30 g of melted coconut fat. Obtained mixture was homogenised at 200 and 100 bar inlet and outlet, respectively. Homogenised mixture was heated to 85°C for the duration of 5 minutes, for the purpose of preventing growth of undesired micro-organisms and to partially unfold fava bean proteins. Heat treated solution was then cooled to fermentation temperature of 40°C. In order to increase the buffering capacity and to enrich the yoghurt with calcium, a sterile solution containing 15 g of citric acid (15 wt-%) and 1.5 g of calcium phosphate was mixed with the heat-treated solution. Finally, the solution containing all the previously mentioned ingredients was inoculated with a starter culture and allowed to ferment, while maintaining a steady 40 °C temperature until pH of 4.6 was reached (appx. 5 hours), during which the product gained highly viscous, thick, gel-structure, similar to a yoghurt produced from dairy ingredients. After target pH-value was reached, the product was simultaneously cooled to 12°C and mixed to produce a discontinuous gel structure, greatly resembling that of a stirred type dairy yoghurt. Final product was then packed and allowed to cool to 5 °C in a refrigerator. The finished product was neutral, nearly white in colour, had smooth texture and viscosity comparable to a typical stirred dairy yoghurt and mild, neutral taste with no perceived bitterness.

### References

EP 2566346 A4
Berot S, Gueguen J, Berthaud C. 1987. Ultrafiltration of faba bean protein extracts: Process parameters and functional properties of the isolates. Lebensm Wiss Tech 20:143-150.
Olsen H.S. 1978. Continuous pilot plant production of bean protein by extraction, centrifugation, ultrafiltration and spray drying. Lebensm Wiss Tech 11:57-64.

## Claims

1. A process for producing a plant-based food product, **characterized in that** the process comprises the steps of
a. preparing a plant protein suspension by mixing leguminous plant protein raw material, at least one antioxidant, and water to obtain an aqueous protein suspension,
b. separating insoluble solids from the aqueous protein suspension to obtain a clarified aqueous protein suspension and an insoluble fraction,
c. treating said clarified aqueous protein suspension with at least one enzyme having tannase activity capable of modifying polyphenols originating from leguminous plant raw material to obtain an enzyme-treated aqueous protein suspension,
d. subjecting the enzyme-treated aqueous protein suspension to a heat treatment at a temperature of about 50°C to about 160 °C to obtain a heat-treated aqueous protein suspension,
e. concentrating the heat-treated aqueous protein suspension using membrane filtration to obtain a high protein ingredient as a retentate,
f. optionally washing the concentrated aqueous protein suspension by diafiltration,
g. obtaining a high protein ingredient having a protein content greater than about 70 wt% protein/dry matter as a retentate from the membrane filtration,
h. optionally, further concentrating the high protein ingredient into a protein concentrate or isolate in the form of suspension or powder,
i. fermenting and/or acidifying the high-protein ingredient, and optionally further cooling and/or adding jam, beta-glucan, flavoring and/or additives to said high-protein ingredient, and
j. obtaining a plant-based food product.

2. The process according to any one of the preceding claims, **characterized in that** the leguminous plant protein is selected from dry and fresh beans, soybeans, dry and fresh peas, lentils, chickpeas and peanuts, more preferably selected form broad bean and pea, most preferably from broad bean.

3. The process according to any one of the preceding claims, **characterized in that** the leguminous plant protein raw material in step a. is air classified protein concentrate.

4. The process according to any one of the preceding claims, **characterized in that** the leguminous plant protein raw material in step a. is in powder form, preferably having a particle size in the range of 5 to 300 µm, more preferably 10 to 275 µm.

5. The process according to any one of the preceding claims, **characterized in that** the aqueous protein suspension contains 5 - 30 wt%, preferably 6 - 15 wt%, more preferably 8 wt% of leguminous plant protein.

6. The process according to any one of the preceding claims, **characterized in that** the preparation in step a. and the enzyme treatment in step c. are carried out at a temperature of between 10°C and 60°C, preferably between 15°C and 50°C, more preferably between 20°C and 40°C, most preferably between 20°C and 25°C.

7. The process according to any one of the preceding claims, **characterized in that** the preparation in step a. and the enzyme treatment in step c. are carried out at a pH of about pH 4.5 to about pH 11, preferably from about pH 6.0 to about pH 7.0.

8. The process according to any one of the preceding claims, **characterized in that** the preparation in step a. is carried out from 10 minutes to 4 hours, preferably from 20 minutes to 3 hours, more preferably from 30 minutes to 2 hours, most preferably 90 minutes.

9. The process according to any one of the preceding claims, **characterized in that** at least one antioxidant is selected from the group consisting of sulphites, sulphates and vitamins, preferably sulphites and ascorbic acid, more preferably sodium sulphite and ascorbic acid.

10. The process according to any one of the preceding claims, **characterized in that** the aqueous protein suspension in step a. comprises 0.001 - 1.0 wt% of at least one antioxidant, such as 0.01 - 1.0 wt% sulphite salt or sulphate salt, preferably 0.02 wt% sulphite salt or sulphate salt, most preferably the sulphite salt is sodium sulphite (Na₂SO₃), and/or 0.01 - 0.25 wt% ascorbic acid, preferably 0.1 wt% ascorbic acid.

11. The process according to any one of the preceding claims, **characterized in that** in step b. separation is carried out by centrifugation, such as by employing a decanter centrifuge, optionally followed by disc centrifugation and/or filtration.

12. The process according to any one of the preceding claims, **characterized in that** at least one enzyme capable of modifying polyphenols comprises an enzyme mixture of a carbohydrase and cellulase and mixture thereof.

13. The process according to any one of the preceding claims, **characterized in that** in the enzyme treatment step c. the enzyme treatment is carried out from 5 minutes to 2 hours, preferably from 10 minutes to 1 hour, more preferably for 30 minutes.

14. The process according to any one of the preceding claims, **characterized in that** in the enzyme treatment step c. the enzyme further includes at least one main or side activity of an enzyme selected from the group consisting of pectinases, hemicellulase, xylanase, beta-glucanase, mannanase, glucanase and amylases for example glucoamylase, isoamylases, alpha-amylase and beta-amylase.

15. The process according to any one of the preceding claims, **characterized in that** in the enzyme treatment step c. the enzyme is used in amount of 0.0001 - 10 wt% on dry matter basis, preferably 0.001 - 5 wt% on dry matter basis, more preferably 0.01 - 2 wt% on dry matter basis, most preferably 0.1 wt% on dry matter basis.

16. The process according to any one of the preceding claims, **characterized in that** in step d. the heat-treatment is carried out at a temperature of about 60°C to about 135°C, preferably from about 60°C to about 120°C, more preferably from about 75°C to about 80°C, for about 2 seconds to about 60 minutes, preferably from about 10 seconds to about 60 minutes, preferably about 10 seconds to about 5 minutes, more preferably about 5 minutes.

17. The process according to any one of the preceding claims, **characterized in that** in step d. the heat-treatment is carried out at a temperature of about 135°C for about 2 to 5 seconds.

18. The process according to any one of the preceding claims, **characterized in that** in step e. the membrane filtration is microfiltration, ultrafiltration, nanofiltration or reverse osmosis.

19. The process according to any one of the preceding claims, **characterized in that** the diafiltration step f. may contain one or more diafiltrations.

20. The process according to any one of the preceding claims, **characterized in that** in step h. a further concentration is carried out using evaporation or centrifugation.

21. The process according to any one of the preceding claims, **characterized in that** in step e. concentration and washing steps are carried out to separate a retentate and permeate.

22. The process according to any one of the preceding claims, **characterized in that** the process further comprises after step f. a pasteurization step, which is carried out at a temperature of about 55° to about 70°C, preferably about 60° to about 65°C, for about 30 seconds to about 60 minutes, preferably about 10 minutes to about 15 minutes.

23. The process according to any one of the preceding claims, **characterized in that** the process further comprises after step f. and after optional pasteurization step cooling of the aqueous protein suspension to a temperature of about 25° to about 40°C.

24. The process according to any one of the preceding claims, **characterized in that** the process further comprises after step f. and after optional pasteurization and cooling steps drying the obtained aqueous protein suspension, preferably using spray drying.

25. The process according to any one of the preceding claims, **characterized in that** the high-protein ingredient is an isolate with a protein content in excess of about 90 % protein/dry matter, preferably at least about 100 % protein/dry matter, (N x 6.25) dry weight basis.

26. A plant-based food product obtainable with the process according to any one of the preceding claims 1 - 25, **characterized in that** the food product comprises a leguminous plant-based high protein ingredient having a protein content greater than about 70 % protein/dry matter, preferably the high-protein ingredient is an isolate with a protein content in excess of about 90 % protein/dry matter, preferably at least about 100 % protein/dry matter, (N x 6.25) dry weight basis, and the high protein ingredient has neutral color and no perceived bitterness.

27. The plant-based food product according to claim 26 , **characterized in that** the product is a plant-based dairy alternative selected from the group consisting of gurt, yoghurt, drinkable yoghurt, crème fraiche, sour cream, sour milk, pudding, set-type yoghurt, smoothie, quark, cheese, cream cheese, and ice cream, or meat analogue, preferably the product is gurt or cheese.

28. The plant-based food product according to claim 26 or 27, **characterized in that** the product further comprises viable bacteria and/or probiotics.

## Patentansprüche

1. Verfahren zur Herstellung eines pflanzenbasierten Lebensmittelprodukts, **gekennzeichnet dadurch, dass** das Verfahren die folgenden Schritte umfasst:
a. Herstellen einer pflanzlichen Proteinsuspension durch Vermischen von einem leguminosen pflanzlichen Proteinrohstoff, mindestens einem Antioxidans und Wasser, um eine wässrige Proteinsuspension zu erhalten,
b. Abtrennen von unlöslichen Feststoffen aus der wässrigen Proteinsuspension, um eine geklärte wässrige Proteinsuspension und eine unlösliche Fraktion zu erhalten,
c. Behandeln der geklärten wässrigen Proteinsuspension mit mindestens einem Enzym mit Tannaseaktivität, das in der Lage ist, aus leguminosem Pflanzenrohstoff stammende Polyphenole zu modifizieren, um eine enzymbehandelte wässrige Proteinsuspension zu erhalten,
d. Unterziehen der enzymbehandelten wässrigen Proteinsuspension einer Wärmebehandlung bei einer Temperatur von etwa 50 °C bis etwa 160 °C, um eine wärmebehandelte wässrige Proteinsuspension zu erhalten,
e. Konzentrieren der wärmebehandelten wässrigen Proteinsuspension mittels Membranfiltration, um einen proteinreichen Bestandteil als Retentat zu erhalten,
f. wahlweise Waschen der konzentrierten wässrigen Proteinsuspension durch Diafiltration,
g. Gewinnen eines proteinreichen Bestandteils mit einem Proteingehalt von größer als etwa 70 Gew.-% Protein/Trockensubstanz als Retentat aus der Membranfiltration,
h. wahlweise weiteres Konzentrieren des proteinreichen Bestandteils zu einem Proteinkonzentrat oder Isolat in Form einer Suspension oder eines Pulvers,
i. Fermentieren und/oder Ansäuern des proteinreichen Bestandteils, und wahlweise weiteres Abkühlen und/oder Hinzufügen von Konfitüre, Beta-Glucan, Aromastoffen und/oder Zusatzstoffen zum proteinreichen Bestandteil, und
j. Gewinnen eines pflanzenbasierten Lebensmittelprodukts.

2. Verfahren nach einem der vorhergehenden Ansprüche, **gekennzeichnet dadurch, dass** das leguminose pflanzliche Protein aus trockenen und frischen Bohnen, Sojabohnen, trockenen und frischen Erbsen, Linsen, Kichererbsen und Erdnüssen ausgewählt wird, bevorzugter aus Ackerbohne und Erbse, am bevorzugtesten aus Ackerbohne ausgewählt wird.

3. Verfahren nach einem der vorhergehenden Ansprüche, **gekennzeichnet dadurch, dass** es sich bei dem leguminosen pflanzlichen Proteinrohstoff in Schritt a. um ein luftgesichtetes Proteinkonzentrat handelt.

4. Verfahren nach einem der vorhergehenden Ansprüche, **gekennzeichnet dadurch, dass** der leguminose pflanzliche Proteinrohstoff in Schritt a. in Pulverform vorliegt, bevorzugt mit einer Teilchengröße im Bereich von 5 bis 300 µm, bevorzugter 10 bis 275 µm.

5. Verfahren nach einem der vorhergehenden Ansprüche, **gekennzeichnet dadurch, dass** die wässrige Proteinsuspension 5-30 Gew.-%, bevorzugt 6-15 Gew.-%, bevorzugter 8 Gew.-% des leguminosen pflanzlichen Proteins enthält.

6. Verfahren nach einem der vorhergehenden Ansprüche, **gekennzeichnet dadurch, dass** die Herstellung in Schritt a. und die Enzymbehandlung in Schritt c. bei einer Temperatur zwischen 10 °C und 60 °C, bevorzugt zwischen 15 °C und 50 °C, bevorzugter zwischen 20 °C und 40 °C, höchstbevorzugt zwischen 20 °C und 25 °C ausgeführt werden.

7. Verfahren nach einem der vorhergehenden Ansprüche, **gekennzeichnet dadurch, dass** die Herstellung in Schritt a. und die Enzymbehandlung in Schritt c. bei einem pH-Wert von etwa pH 4,5 bis etwa pH 11, bevorzugt von etwa pH 6,0 bis etwa pH 7,0 ausgeführt werden.

8. Verfahren nach einem der vorhergehenden Ansprüche, **gekennzeichnet dadurch, dass** die Herstellung in Schritt a. 10 Minuten bis 4 Stunden, bevorzugt 20 Minuten bis 3 Stunden, bevorzugter 30 Minuten bis 2 Stunden, höchstbevorzugt 90 Minuten ausgeführt wird.

9. Verfahren nach einem der vorhergehenden Ansprüche, **gekennzeichnet dadurch, dass** mindestens ein Antioxidans aus der Gruppe bestehend aus Sulfiten, Sulfaten und Vitaminen, bevorzugt Sulfiten und Ascorbinsäure, bevorzugter Natriumsulfit und Ascorbinsäure ausgewählt wird.

10. Verfahren nach einem der vorhergehenden Ansprüche, **gekennzeichnet dadurch, dass** die wässrige Proteinsuspension in Schritt a. 0,001-1,0 Gew.-% mindestens eines Antioxidans, wie 0,01-1,0 Gew.-% Sulfitsalz oder Sulfatsalz, bevorzugt 0,02 Gew.-% Sulfitsalz oder Sulfatsalz, wobei das Sulfitsalz höchstbevorzugt Natriumsulfit (Na₂SO₃) ist, und/oder 0,01-0,25 Gew.-% Ascorbinsäure, bevorzugt 0,1 Gew.-% Ascorbinsäure, umfasst.

11. Verfahren nach einem der vorhergehenden Ansprüche, **gekennzeichnet dadurch, dass** in Schritt b. die Abtrennung durch Zentrifugierung, wie durch Nutzung einer Dekantierzentrifuge, ausgeführt wird, wahlweise gefolgt von einer Tellerzentrifugierung und/oder Filtration.

12. Verfahren nach einem der vorhergehenden Ansprüche, **gekennzeichnet dadurch, dass** mindestens ein Enzym, das in der Lage ist, Polyphenole zu modifizieren, ein Enzymgemisch einer Carbohydrase und Cellulase und eine Mischung derselben umfasst.

13. Verfahren nach einem der vorhergehenden Ansprüche, **gekennzeichnet dadurch, dass** im Enzymbehandlungsschritt c. die Enzymbehandlung 5 Minuten bis 2 Stunden, bevorzugt 10 Minuten bis 1 Stunde, bevorzugter für 30 Minuten ausgeführt wird.

14. Verfahren nach einem der vorhergehenden Ansprüche, **gekennzeichnet dadurch, dass** im Enzymbehandlungsschritt c. das Enzym ferner mindestens eine Haupt- oder Nebenaktivität eines Enzyms aufweist, welches aus der Gruppe bestehend aus Pektinasen, Hemicellulase, Xylanase, Beta-Glucanase, Mannanase, Glucanase und Amylasen, beispielsweise Glucoamylase, Isoamylasen, Alpha-Amylase und Beta-Amylase, ausgewählt ist.

15. Verfahren nach einem der vorhergehenden Ansprüche, **gekennzeichnet dadurch, dass** im Enzymbehandlungsschritt c. das Enzym in einer Menge von 0,0001-10 Gew.-% bezogen auf die Trockenmasse, bevorzugt 0,001-5 Gew.-% bezogen auf die Trockenmasse, bevorzugter 0,01-2 Gew.-% bezogen auf die Trockenmasse, höchstbevorzugt 0,1 Gew.-% bezogen auf die Trockenmasse verwendet wird.

16. Verfahren nach einem der vorhergehenden Ansprüche, **gekennzeichnet dadurch, dass** in Schritt d. die Wärmebehandlung bei einer Temperatur von etwa 60 °C bis etwa 135 °C, bevorzugt von etwa 60 °C bis etwa 120 °C, bevorzugter von etwa 75 °C bis etwa 80 °C, für etwa 2 Sekunden bis etwa 60 Minuten, vorzugsweise etwa 10 Sekunden bis etwa 60 Minuten, bevorzugt etwa 10 Sekunden bis etwa 5 Minuten, bevorzugter etwa 5 Minuten, ausgeführt wird.

17. Verfahren nach einem der vorhergehenden Ansprüche, **gekennzeichnet dadurch, dass** in Schritt d. die Wärmebehandlung bei einer Temperatur von etwa 135 °C für etwa 2 bis 5 Sekunden ausgeführt wird.

18. Verfahren nach einem der vorhergehenden Ansprüche, **gekennzeichnet dadurch, dass** es sich in Schritt e. bei der Membranfiltration um Mikrofiltration, Ultrafiltration, Nanofiltration oder Umkehrosmose handelt.

19. Verfahren nach einem der vorhergehenden Ansprüche, **gekennzeichnet dadurch, dass** der Diafiltrationsschritt f. eine oder mehrere Diafiltrationen enthalten kann.

20. Verfahren nach einem der vorhergehenden Ansprüche, **gekennzeichnet dadurch, dass** in Schritt h. eine weitere Konzentration mittels Verdampfung oder Zentrifugierung ausgeführt wird.

21. Verfahren nach einem der vorhergehenden Ansprüche, **gekennzeichnet dadurch, dass** in Schritt e. die Schritte der Konzentration und Wäsche ausgeführt werden, um ein Retentat und Permeat abzuscheiden.

22. Verfahren nach einem der vorhergehenden Ansprüche, **gekennzeichnet dadurch, dass** das Verfahren nach Schritt f. ferner einen Pasteurisierschritt umfasst, der bei einer Temperatur von etwa 55 °C bis etwa 70 °C, bevorzugt von etwa 60 °C bis etwa 65 °C, für etwa 30 Sekunden bis etwa 60 Minuten, bevorzugt etwa 10 Minuten bis etwa 15 Minuten, ausgeführt wird.

23. Verfahren nach einem der vorhergehenden Ansprüche, **gekennzeichnet dadurch, dass** das Verfahren im Anschluss an Schritt f. und im Anschluss an den wahlweisen Pasteurisierschritt ferner eine Abkühlung der wässrigen Proteinsuspension auf eine Temperatur von etwa 25 °C bis etwa 40 °C umfasst.

24. Verfahren nach einem der vorhergehenden Ansprüche, **gekennzeichnet dadurch, dass** das Verfahren im Anschluss an Schritt f. und im Anschluss an die Schritte der wahlweisen Pasteurisierung und Abkühlung eine Trocknung der gewonnenen wässrigen Proteinsuspension, bevorzugt mittels Sprühtrocknung, umfasst.

25. Verfahren nach einem der vorhergehenden Ansprüche, **gekennzeichnet dadurch, dass** es sich beim proteinreichen Bestandteil um ein Isolat mit einem Proteingehalt von mehr als etwa 90 % Protein/Trockenmasse, bevorzugt mindestens etwa 100 % Protein/Trockenmasse, (N × 6,25) bezogen auf das Trockengewicht, handelt.

26. Pflanzenbasiertes Lebensmittelprodukt, das mit dem Verfahren nach einem der vorhergehenden Ansprüche 1 bis 25 gewonnen werden kann, **gekennzeichnet dadurch, dass** das Lebensmittelprodukt einen leguminosen pflanzenbasierten proteinreichen Bestandteil mit einem Proteingehalt von größer als etwa 70 % Protein/Trockenmasse umfasst, wobei es sich beim proteinreichen Bestandteil vorzugsweise um ein Isolat mit einem Proteingehalt von mehr als etwa 90 % Protein/Trockenmasse, bevorzugt mindestens etwa 100 % Protein/Trockenmasse, (N × 6,25) bezogen auf das Trockengewicht, handelt und der proteinreiche Bestandteil eine neutrale Färbung und keine wahrgenommene Bitterkeit aufweist.

27. Pflanzenbasiertes Lebensmittelprodukt nach Anspruch 26, **gekennzeichnet dadurch, dass** das Produkt eine pflanzenbasierte Milchalternative ausgewählt aus der Gruppe bestehend aus Gurt, Joghurt, Trinkjoghurt, Crème fraîche, Sauerrahm, Sauermilch, Pudding, stichfestem Joghurt, Smoothie, Quark, Käse, Frischkäse und Speiseeis, oder ein Fleischersatzprodukt ist, wobei das Produkt vorzugsweise Gurt oder Käse ist.

28. Pflanzenbasiertes Lebensmittelprodukt nach Anspruch 26 oder 27, **gekennzeichnet dadurch, dass** das Produkt ferner lebensfähige Bakterien und/oder Probiotika enthält.

## Revendications

1. Procédé de fabrication d'un produit alimentaire à base végétale, **caractérisé en ce que** le procédé comprend les étapes consistant à :
a. préparer une suspension de protéines végétales en mélangeant une matière première protéique végétale légumineuse, au moins un antioxydant et de l'eau afin d'obtenir une suspension protéique aqueuse,
b. séparer les matières solides insolubles de la suspension protéique aqueuse afin d'obtenir une suspension protéique aqueuse clarifiée et une fraction insoluble,
c. traiter ladite suspension protéique aqueuse clarifiée avec au moins une enzyme présentant une activité tannase capable de modifier les polyphénols issus de la matière première végétale légumineuse afin d'obtenir une suspension protéique aqueuse traitée enzymatiquement,
d. soumettre la suspension protéique aqueuse traitée enzymatiquement à un traitement thermique à une température comprise entre environ 50 °C et environ 160 °C afin d'obtenir une suspension protéique aqueuse traitée thermiquement,
e. concentrer la suspension protéique aqueuse traitée thermiquement au moyen d'une filtration sur membrane afin d'obtenir un ingrédient à haute teneur en protéines sous forme de rétentat,
f. en option, laver la suspension protéique aqueuse concentrée par diafiltration,
g. obtenir un ingrédient à haute teneur en protéines présentant une teneur en protéines supérieure à environ 70 % en poids de protéine sur matière sèche sous forme de rétentat issu de la filtration sur membrane,
h. en option, concentrer davantage l'ingrédient à haute teneur en protéines afin d'obtenir un concentré protéique ou isolat sous forme de suspension ou de poudre,
i. fermenter et/ou acidifier l'ingrédient à haute teneur en protéines, et, en option, refroidir davantage et/ou ajouter de la confiture, de la bêta-glucane, des arômes et/ou des additifs audit ingrédient à haute teneur en protéines, et
j. obtenir un produit alimentaire à base végétale.

2. Procédé selon l'une des revendications précédentes, **caractérisé en ce que** la protéine végétale légumineuse est choisie parmi les haricots secs et frais, les graines de soja, les pois secs et frais, les lentilles, les pois chiches et les cacahuètes, choisie plus préférentiellement parmi les fèves et les pois, tout particulièrement parmi les fèves.

3. Procédé selon l'une des revendications précédentes, **caractérisé en ce que** la matière première protéique végétale légumineuse à l'étape a. est un concentré protéique obtenu par criblage pneumatique.

4. Procédé selon l'une des revendications précédentes, **caractérisé en ce que** la matière première protéique végétale légumineuse à l'étape a. est sous forme de poudre, de préférence avec une taille de particules comprise entre 5 et 300 µm, plus préférentiellement entre 10 et 275 µm.

5. Procédé selon l'une des revendications précédentes, **caractérisé en ce que** la suspension protéique aqueuse contient 5 à 30 % en poids, de préférence 6 à 15 % en poids, plus préférentiellement 8 % en poids de protéine végétale légumineuse.

6. Procédé selon l'une des revendications précédentes, **caractérisé en ce que** la préparation à l'étape a. et le traitement enzymatique à l'étape c. sont effectués à une température comprise entre 10 °C et 60 °C, de préférence entre 15 °C et 50 °C, plus préférentiellement entre 20 °C et 40 °C, tout particulièrement entre 20 °C et 25 °C.

7. Procédé selon l'une des revendications précédentes, **caractérisé en ce que** la préparation à l'étape a. et le traitement enzymatique à l'étape c. sont effectués à une valeur pH d'environ pH 4,5 à environ pH 11, de préférence d'environ pH 6,0 à environ pH 7,0.

8. Procédé selon l'une des revendications précédentes, **caractérisé en ce que** la préparation à l'étape a. est effectuée pendant 10 minutes à 4 heures, de préférence pendant 20 minutes à 3 heures, plus préférentiellement pendant 30 minutes à 2 heures, tout particulièrement pendant 90 minutes.

9. Procédé selon l'une des revendications précédentes, **caractérisé en ce qu'**au moins un antioxydant est choisi parmi le groupe constitué des sulfites, des sulfates et des vitamines, de préférence les sulfites et de l'acide ascorbique, plus préférentiellement parmi le sulfite de sodium et l'acide ascorbique.

10. Procédé selon l'une des revendications précédentes, **caractérisé en ce que** la suspension protéique aqueuse à l'étape a. comprend 0,001 à 1,0 % en poids d'au moins un antioxydant, tel que 0,01 à 1,0 % en poids de sel de sulfite ou sel de sulfate, de préférence 0,02 % en poids de sel de sulfite ou sel de sulfate, le sel de sulfite étant tout particulièrement le sulfite de sodium (Na₂SO₃), et/ou 0,01 à 0,25 % en poids d'acide ascorbique, de préférence 0,1 % en poids d'acide ascorbique.

11. Procédé selon l'une des revendications précédentes, **caractérisé en ce que**, à l'étape b., la séparation est effectuée par centrifugation, tel que par l'utilisation d'une centrifugeuse à décantation, suivie, en option, d'une centrifugation à disques et/ou d'une filtration.

12. Procédé selon l'une des revendications précédentes, **caractérisé en ce qu'**au moins une enzyme capable de modifier les polyphénols comprend un mélange enzymatique constitué d'une carbohydrase et d'une cellulase et de mélanges de celles-ci.

13. Procédé selon l'une des revendications précédentes, **caractérisé en ce que**, à l'étape de traitement enzymatique c., le traitement enzymatique est effectué pendant 5 minutes à 2 heures, de préférence pendant 10 minutes à 1 heure, plus préférentiellement pendant 30 minutes.

14. Procédé selon l'une des revendications précédentes, **caractérisé en ce que**, à l'étape de traitement enzymatique c., l'enzyme comprend également au moins une activité principale ou secondaire d'une enzyme choisie parmi le groupe constitué des pectinases, de l'hémicellulase, de la xylanase, de la bêta-glucanase, de la mannanase, de la glucanase et des amylases, par exemple la glucoamylase, les isoamylases, l'alpha-amylase et la bêta-amylase.

15. Procédé selon l'une des revendications précédentes, **caractérisé en ce que**, à l'étape de traitement enzymatique c., l'enzyme est utilisée à raison de 0,0001 à 10 % en poids sur matière sèche, de préférence de 0,001 à 5 % en poids sur matière sèche, plus préférentiellement de 0,01 à 2 % en poids sur matière sèche, tout particulièrement de 0,1 % en poids sur matière sèche.

16. Procédé selon l'une des revendications précédentes, **caractérisé en ce que**, à l'étape d., le traitement thermique est effectué à une température d'environ 60 °C à environ 135 °C, de préférence d'environ 60 °C à environ 120 °C, plus préférentiellement d'environ 75 °C à environ 80 °C, pendant environ 2 secondes à environ 60 minutes, de préférence environ 10 secondes à environ 60 minutes, de préférence environ 10 secondes à environ 5 minutes, plus préférentiellement environ 5 minutes.

17. Procédé selon l'une des revendications précédentes, **caractérisé en ce que**, à l'étape d., le traitement thermique est effectué à une température d'environ 135 °C pendant environ 2 à 5 secondes.

18. Procédé selon l'une des revendications précédentes, **caractérisé en ce que**, à l'étape e., la filtration sur membrane est la microfiltration, l'ultrafiltration, la nanofiltration ou l'osmose inverse.

19. Procédé selon l'une des revendications précédentes, **caractérisé en ce que** l'étape de diafiltration f. peut contenir une ou plusieurs diafiltrations.

20. Procédé selon l'une des revendications précédentes, **caractérisé en ce que**, à l'étape h., une concentration supplémentaire est effectuée au moyen d'évaporation ou de centrifugation.

21. Procédé selon l'une des revendications précédentes, **caractérisé en ce que**, à l'étape e., des étapes de concentration et de lavage sont effectuées pour séparer un rétentat et perméat.

22. Procédé selon l'une des revendications précédentes, **caractérisé en ce que** le procédé comprend également, après l'étape f., une étape de pasteurisation qui est effectuée à une température d'environ 55 °C à environ 70 °C, de préférence d'environ 60 °C à environ 65 °C, pendant environ 30 secondes à environ 60 minutes, de préférence pendant environ 10 minutes à environ 15 minutes.

23. Procédé selon l'une des revendications précédentes, **caractérisé en ce que** le procédé comprend également, après l'étape f. et après une étape de pasteurisation optionnelle, le refroidissement de la suspension protéique aqueuse à une température d'environ 25 °C à environ 40 °C.

24. Procédé selon l'une des revendications précédentes, **caractérisé en ce que** le procédé comprend également, après l'étape f. et après des étapes de pasteurisation optionnelle et de refroidissement, le séchage de la suspension protéique aqueuse obtenue, de préférence au moyen de séchage par atomisation.

25. Procédé selon l'une des revendications précédentes, **caractérisé en ce que** l'ingrédient à haute teneur en protéines est un isolat avec une teneur en protéines supérieure à environ 90 % de protéines sur matière sèche, de préférence d'au moins environ 100 % de protéines sur matière sèche, (N × 6,25) par rapport au poids sec.

26. Produit alimentaire à base végétale obtenable avec le procédé selon l'une des revendications précédentes 1 à 25, **caractérisé en ce que** le produit alimentaire comprend un ingrédient à base végétale légumineuse à haute teneur en protéines présentant une teneur en protéines supérieure à environ 70 % de protéines sur matière sèche, l'ingrédient à haute teneur en protéines étant de préférence un isolat avec une teneur en protéines supérieure à environ 90 % de protéines sur matière sèche, de préférence d'au moins environ 100 % de protéines sur matière sèche, (N × 6,25) par rapport au poids sec, et l'ingrédient à haute teneur en protéines présente une couleur neutre et ne laisse percevoir aucune amertume.

27. Produit alimentaire à base végétale selon la revendication 26, **caractérisé en ce que** le produit est une alternative au lait à base végétale choisie parmi le groupe constitué de gurt, de yaourt, de yaourt à boire, de crème fraîche, de crème aigre, de lait caillé, de pudding, de yaourt ferme, de smoothie, de fromage blanc, de fromage, de fromage frais et de glace, ou un analogue de viande, le produit étant de préférence du gurt ou du fromage.

28. Produit alimentaire à base végétale selon la revendication 26 ou 27, **caractérisé en ce que** le produit contient également des bactéries viables et/ou des probiotiques.
